# EUROPEAN PATENT APPLICATION

(11) **EP 4 537 666 A1**
(43) Date of publication of application: **16.04.2025**
(21) Application number: 22754505.0
(22) Date of filing: 08.06.2022
(51) Int. Cl.: A21D 2/18, A21D 13/062, A21D 13/24

(54) **SHELF-STABLE AND SATISFYING SOFT-BAKED SNACK PRODUCT**

(71) Applicant: General Mills, Inc., Minneapolis, Minnesota 55426 (US)
(72) Inventor: BUAHA, Celia Bokesa, 31015 Pamplona (ES); ORDOVAS, Eva María, 50500 Tarazone (ES)
(74) Representative: Dehns
(86) International application number: PCT/IB2022/000318
(87) International publication number: WO 2023/237903

(57) **Abstract**

A shelf-stable, indulgent, soft-baked snack product (e.g., a soft-baked snack bar) having reduced saturated fat, sodium, and/or sugar levels ("reduced SFSS") compared to prior art soft-baked snack products but that is indulgent and flavorful to the consumer. A dough composition for making reduced SFSS, shelf-stable, indulgent, soft-baked snack products includes a flour component, a fat component consisting of sunflower oil (e.g., high oleic sunflower oil), and a sucrose-free sugar component including isolated fructose. Sodium-containing leaveners are partially or completely replaced, e.g., by potassium bicarbonate. If present, cocoa powder is used in reduced amounts compared to prior art soft-baked snack products. A method of making a reduced SFSS, shelf-stable, indulgent, soft-baked snack product includes a step of baking the dough composition.

## Description

### BACKGROUND

Many food and drink manufacturers seek to reformulate one or more of their products to be healthier for consumers. A reformulated product features, for example, less saturated fat, sugar and salt than an original formulation. A reformulated product could also feature increased quantities of fiber, protein, fruit, vegetables and/or nuts. In attempting to achieve a reformulated product with a healthier nutrient content, manufacturers are particularly challenged with ensuring the reformulation maintains a consumer's sense of indulgency compared to the original formulation, still fits with the manufacturer's brand identity and does not negatively affect manufacturing costs.

### SUMMARY

The object of the present invention is to provide a shelf-stable, indulgent, soft-baked snack product (e.g., a soft-baked snack bar) having reduced saturated fat, sodium and/or sugar levels ("reduced SFSS") compared to prior art soft-baked snack products, while still being indulgent and flavorful to the consumer.

In some embodiments of the reduced SFSS soft-baked snack product of the present invention, saturated fat is reduced compared to prior art soft-baked snack products (e.g., by at least 48%) by the replacement of a source of saturated fat (e.g., palm fat shortening) with sunflower oil. In some embodiments of the reduced SFSS soft-baked snack product of the present invention, sugar is reduced compared to prior art soft-baked snack products by the replacement of sucrose with fructose, inulin and/or sweetening enhancing flavors (e.g., a flavor modulator that enhances sweetness upfront and/or a flavor modulator that enhances long lasting sweetness). In embodiments, the amount of flour and/or fiber in the reduced SFSS soft-baked snack product is increased, compared to prior art soft-baked snack products, to replace the bulk and structure previously provided by the sucrose. In the reduced SFSS soft-baked snack product of the invention, sodium can be reduced by reducing or eliminating the amount of salt (e.g., reducing up to 100% of salt) and/or replacing at least a portion of a sodium-containing leavener (e.g., sodium bicarbonate) with potassium-containing leavener (e.g., potassium bicarbonate). Preferably, if cocoa powder (e.g., Dutch cocoa) is employed in the reduced SFSS soft-baked snack product, the amount of cocoa powder can be used in reduced amounts (e.g., less than 5%) compared to known prior art soft-baked snack products to further reduce saturated fat content.

In some embodiments, the reduced SFSS soft-baked snack product of the present invention includes a sweet coating. In some embodiments, the reduced SFSS soft-baked snack product has inclusions (e.g., cookie pieces, fruits, crispy cereal, cocoa nibs) to provide additional taste and flavor. Of course, it should be realized that the invention embodiments described in the above paragraphs are not mutually exclusive and therefore can be combined in connection with other embodiments. For instance, the invention encompasses a reduced SFSS soft-baked snack product embodiment which relies on sunflower oil as the fat, excludes sucrose, has reduced salt, employs potassium bicarbonate, provides for a reduced amount of cocoa powder, has a sweet coating and/or incorporates inclusions.

The present invention also provides dough compositions for making reduced SFSS, shelf-stable, indulgent, soft-baked snack products. In some embodiments, a dough composition in accordance with the present invention includes a flour component, a fat component consisting of sunflower oil, and a sucrose-free sugar component including isolated fructose (i.e., added fructose; fructose isolated from a whole food). In a preferred embodiment, the flour is at least 20% of the dough composition (e.g., at least 25%) and the fat component is at least 5% of the dough composition (e.g., at least 9%). In some embodiments, the dough composition has inclusions (e.g., cookie pieces, fruits, crispy cereal, cocoa nibs, chocolate chips) to provide additional taste and flavor.

The present invention also provides methods of preparing a dough composition for making reduced SFSS, shelf-stable, indulgent, soft-baked snack products. A method of preparing a dough composition for making reduced SFSS, shelf-stable, indulgent, soft-baked snack products includes a step of mixing a flour component, a fat component consisting of sunflower oil, and a sucrose-free sugar component including isolated fructose. In certain embodiments, the method of preparing the dough composition further includes a step of adding one or more inclusions. As with the product embodiments described above, combinations of the composition embodiments outlined above are also encompassed by the invention.

A method of making a reduced SFSS, shelf-stable, indulgent, soft-baked snack product includes a step of baking a dough composition including a flour component, a fat component consisting of sunflower oil, and a sucrose-free sugar component including isolated fructose. The dough composition is completely baked without the formation of a crust on its surface. In another embodiment, the method of making the reduced SFSS soft-baked snack product includes a step of coating the baked dough with a sweet coating.

These and various other features and advantages will be apparent from a reading of the following detailed description.

### DETAILED DESCRIPTION

Throughout the present description, unless otherwise specified, the concentrations expressed as percentages always refer to the weight/weight (w/w) percentage, i.e., grams of a given component per 100 g of composition. The term "about" refers to a deviation of plus/minus 10%, preferably plus/minus 5%. As used herein, the term "shelf-stable" generally refers to a food product that can be safely stored (e.g., within sealed packaging) at room temperature (e.g., at 25° C) for a prolonged period of time (e.g., at least 30 days). Over this prolonged period of time, the food has limited bacterial growth (e.g., less than 2 log increase, or less than 1 log increase).

Soft-baked snack products such as soft-baked bars (e.g., soft-baked breakfast bars, soft-baked brownie-like bars) are typically sweet and typically have high contents of saturated fat, sugar and salt/sodium (e.g., contain ingredients such as palm fat shortening (high in saturated fat), sucrose (sugar), salt (sodium chloride), sodium acid polyphosphate (SAPP; leavener) and sodium bicarbonate (leavener)). As such, many prior art soft-baked products are not considered to be healthy. The object of the present invention is to provide a shelf-stable, indulgent, soft-baked snack product having reduced saturated fat, sodium, and/or sugar levels compared to these prior art soft-baked snack products, while being indulgent and flavorful to the consumer. The term "reduced SFSS" used herein refers to a product having reduced saturated fat, sodium and/or sugar levels relative to the prior art.

In a preferred embodiment, the reduced SFSS soft-baked snack product of the present invention has at least 48% less saturated fat, at least 57% less sodium and at least 30% less sugar compared to prior art soft-baked snack products. The reduced SFSS snack product of the present invention is not limited to a particular shape or size but is preferably in the form of a bar-type product or a cookie-type product.

In various embodiments, in the reduced SFSS soft-baked snack product of the present invention, saturated fat is reduced compared to prior art soft-baked snack products (e.g., by at least 48%) by the replacement of a source of saturated fat (e.g., palm fat shortening) with sunflower oil. Preferably, the sunflower oil is high oleic sunflower oil (i.e., sunflower oil having a minimum 80% oleic acid, which is a monounsaturated omega-9 fatty acid). In some embodiments, if cocoa powder (e.g., Dutch (alkalized) cocoa) is used in the reduced SFSS soft-baked snack product, the amount of cocoa powder can be used in reduced amounts (e.g., less than 5%) compared to prior art soft-baked snack products to further reduce saturated fat content. Similarly, in some embodiments, inclusions that contain saturated fat, such as chocolate chips or cacao nibs may be reduced compared to prior art soft-baked snack products, or removed altogether to further reduce saturated fat content.

In some embodiments of the invention, in the reduced SFSS soft-baked snack product of the present invention, sugar is reduced compared to prior art soft-baked snack products by the replacement of sucrose with fructose, inulin and/or sweetening enhancing flavors (e.g., a flavor modulator that enhances sweetness upfront and/or a flavor modulator that enhances long lasting sweetness).

In some embodiments, a sucrose-free sugar component replaces part or all of the sucrose-containing sugar component typically used in soft-baked snack products so as to provide a reduced SFSS soft-baked snack product with a reduced amount of sucrose. The term "sucrose-free sugar component" refers to a component that contains sugar (e.g., fructose, glucose) but does not contain added/isolated sucrose (i.e., sucrose not already present, e.g., in a fruit or nut whole food component potentially elsewhere in the dough). The sucrose-free sugar component of the present invention includes isolated fructose (i.e., added fructose; fructose isolated from a whole food). In some embodiments, the fructose is additional fructose (i.e., fructose added in addition to fructose initially included in the original formulation for the prior art soft-baked snack product). In preferred embodiments, the sucrose-free sugar component includes inulin or its hydrolyzed form, oligofructose (inulin fructo oligosaccharide). The sucrose-free sugar component can include sweetening enhancing flavors (e.g., a flavor modulator that enhances sweetness upfront and/or a flavor modulator that enhances long lasting sweetness). Without being bound by theory, it is believed that the combination of a flavor modulator that enhances sweetness upfront and a flavor modulator that enhances long lasting sweetness gives the reduced SFSS soft-baked snack product of the present invention the indulgent characteristic found in prior art soft-baked products. In some embodiments, the amount of flour and/or fiber in the reduced SFSS soft-baked snack product is increased compared to prior art soft-baked snack products, to replace the bulk and structure previously provided by the sucrose. In some preferred embodiments, a reduced SFSS soft-baked snack product provided herein contains no added/isolated sucrose. Preferably, high intensity sweeteners (e.g., sucralose, stevia extracts, monk fruit extracts, and the like) are not included in the dough composition.

In some embodiments, in the reduced SFSS soft-baked snack product of the invention, sodium is reduced by reducing or eliminating the amount of salt (e.g., reducing up to 100% of salt) and reducing and/or replacing sodium-containing leaveners. For example, a sodium-containing leavening acid, such as sodium acid pyrophosphate (SAPP) can be reduced and/or a sodium-containing leavening base (e.g., sodium bicarbonate) can be partially or entirely replaced with potassium-containing leaveners (e.g., potassium bicarbonate). In a preferred embodiment, sodium bicarbonate is entirely replaced with potassium bicarbonate and SAPP is reduced.

In some embodiments, the reduced SFSS soft-baked snack product of the present invention includes a sweet coating. In the optional sweet coating, sucrose is substituted by maltodextrin and/or resistant dextrin. In a further embodiment, the reduced SFSS soft-baked snack product has inclusions (e.g., cookie pieces, fruits, crispy cereal, or the like) to provide additional taste and flavor. Without being bound by theory, it is believed that the inclusions give the reduced SFSS soft-baked snack product of the present invention the indulgent characteristic found in prior art soft-baked products because the inclusions provide bursts of flavor, preventing the product from having a uniformed taste throughout.

Surprisingly, despite a reduction in sugar and no inclusion of high intensity sweeteners (and, if applicable, a reduction in cocoa powder and/or fat-based inclusions), the flavor of the reduced SFSS soft-baked snack product of the invention remains indulgent and sweet. Particularly surprising is that the reduction in cocoa powder does not result in a significant perception of reduction in cocoa flavor. Further, the reduction in sodium surprisingly does not result in blandness in the reduced SFSS soft-baked snack product. The inclusion of potassium bicarbonate achieves sufficient leavening without adding a bitter flavor and the complete replacement of the palm shortening with sunflower oil achieves a surprisingly good texture.

The present invention provides dough compositions for making reduced SFSS, shelf-stable, indulgent, soft-baked snack products. In one embodiment, a dough composition in accordance with the present invention includes a flour component, a fat component consisting of sunflower oil, and a sucrose-free sugar component including isolated fructose (i.e., added fructose; fructose isolated from a whole food). In a preferred embodiment, the flour is at least 20% of the dough composition (e.g., at least 25%) and the fat component is at least 5% of the dough composition (e.g., at least 9%).

Flours useful for the flour component are of a conventional type and quality including cake flour, pastry flour, bread flour, and all-purpose flour, and mixtures thereof. Wheat flours are preferred but other flours conventionally used in the preparation of baked goods are also employed in full or partial substitution for the wheat flour. Traditional cake flour used for layer cakes has about 8% or less protein by weight of the flour. Pastry flour ordinarily has a protein level of about 10%. Other flours, such as bread flour, generally have a higher protein level of about 11 to 13% by weight. One protein range for wheat flour used in the present invention is between about 9 to 10% by weight of the flour. A general all-purpose flour is also usable. This type of all-purpose flour generally comprises a mixture of both hard and soft wheat flours, i.e., both high protein level and low protein level flours. Such flours are useful if the average protein content ranges from about 8 to 10% by weight. Flour is used as at least 20% of the dough composition (e.g., at least 25%) and helps, since the dough composition is sucrose-free, replace the bulk and structure that would have otherwise been provided by sucrose.

"Fat component" refers to a component of the dough composition or resulting snack product which provides substantially all of the fat for the dough composition or snack product. "Fat component" does not include fat that is intrinsic to other components of the dough composition or snack product (e.g., fat intrinsic to an egg ingredient, fat intrinsic to cocoa powder, or fat intrinsic to inclusions such as cookie pieces). The transitional phrase "consisting of" excludes any ingredient not specified. Hence, "a fat component consisting of sunflower oil" refers to a fat component that excludes any ingredient that is not sunflower oil. Preferably, the sunflower oil of the fat component is high oleic sunflower oil. Sunflower oil is produced from oil type sunflower seeds and is a combination of monounsaturated and polyunsaturated fats with low saturated fat levels. High oleic sunflower oil is a type of sunflower oil that is available that is very high in oleic (monounsaturated) acid (i.e., a minimum 80% oleic acid, which is a monounsaturated omega-9 fatty acid). The sunflower oil replaces e.g., palm fat shortening typically used in soft-baked snack products so as to provide a reduced SFSS soft-baked snack product with a reduced amount of saturated fat (e.g., reduced by at least 48%).

In a further embodiment, the dough composition has inclusions (e.g., cookie pieces and/or crumbs, fruits, crispy cereal, cacao nibs, fat-based chips (e.g., chocolate chips, compound chips)) to provide additional taste and flavor. In some preferred embodiments, inclusions can contain low or no saturated fat. Thus, if cacao nibs and/or fat-based chips are included, they may be preferably included in amounts reduced relative to prior art soft-baked products. Without being bound by theory, it is believed that inclusions in a reduced SFSS soft-baked snack product can enhance the indulgent characteristic found in prior art soft-baked products because the inclusions provide bursts of flavor, preventing the product from having a uniform taste throughout.

In addition to the flour, the fat component and the sucrose-free sugar component, the dough composition of the present invention can further include a gum (e.g., locust bean gum and/or xanthan gum), glycerin, added flavor (e.g., vanilla, butter, biscuit, and the like), wheat fiber, Dutch cocoa (e.g., less than 5%), salt, leaveners (e.g., SAPP, potassium bicarbonate) and/or dried egg whites. Preferably, the dough composition does not contain sodium bicarbonate.

Table 1 below shows an exemplary dough formulation for a prior art soft-baked snack product compared to an exemplary dough formulation for a reduced SFSS soft-baked snack product of the present invention. Both dough formulations are for brownie-like, cookies- and-cream-flavored soft-baked snack bars. Notably, the exemplary dough formulation for a reduced SFSS soft-baked snack product of the present invention 1) has no compound and/or chocolate chips, palm fat shortening, added sucrose or sodium bicarbonate, 2) has reduced amounts of Dutch cocoa, salt and SAPP and 3) has increased amounts (or the addition of) of inulin, fructose, sweetness flavors, wheat flour, and potassium bicarbonate, compared to the dough formulation for the prior art soft-baked snack product.

**Table 1**

| | **Inventive Soft-Baked Snack Bar** | **Prior Art Soft-Baked Snack Bar** |
|---|---|---|
| **Ingredient** | **% by weight** | **% by weight** |
| Glycerin | 5-10 | 6-8 |
| Cookie crumbs | 3-6 | 4-6 |
| Chocolate and/or compound chips | 0 | 4-6 |
| Inulin fructo-oligosaccharide | 20-25 | 20-22 |
| Upfront sweetness flavor | 0.1-0.5 | 0 |
| Sunflower oil, high oleic | 5-10 | 1-2 |
| Palm fat shortening | 0 | 4-6 |
| Wheat flour | 20-30 | 15-20 |
| Long lasting sweetness flavor | 0.01-0.05 | 0 |
| Other flavors (e.g., vanilla, butter, biscuit) | 0.5-1.0 | 0.6-0.9 |
| Fructose | 6-10 | 5-7 |
| Sucrose | 0 | 7-9 |
| Water | 8-10 | 1-3 |
| Wheat Fiber | 2-5 | 3-5 |
| Dutch cocoa | 3-5 | 5-6 |
| Salt | 0-0.3 | 0.3-0.4 |
| SAPP | 0.2-0.4 | 0.5-0.6 |
| Sodium bicarbonate | 0 | 0.3-0.5 |
| Potassium bicarbonate | 0.1-0.3 | 0 |
| Gum blend (e.g., locust bean, xanthan) | 0.08-0.12 | 0.08-0.12 |
| Dried Egg whites | 0-1.0 | 1.7-2.0 |

The present invention also provides methods of preparing a dough composition for making reduced SFSS, shelf-stable, indulgent, soft-baked snack products. A method of preparing a dough composition for making reduced SFSS, shelf-stable, indulgent, soft-baked snack products includes a step of mixing a flour component, a fat component consisting of sunflower oil, and a sucrose-free sugar component including isolated fructose. In some preferred embodiments, the flour is at least 20% of the dough composition (e.g., at least 25%) and the fat component is at least 5% of the dough composition (e.g., at least 9%). In some embodiments, the method of preparing the dough composition further includes a step of adding inclusions.

A method of making a reduced SFSS, shelf-stable, indulgent, soft-baked snack product includes a step of baking a dough composition including a flour component, a fat component consisting of sunflower oil, and a sucrose-free sugar component including isolated fructose. Preferably, the dough composition is baked at a temperature below 170°C (e.g., 160°C) for more than 15 minutes (e.g., at least 17 minutes). Also preferably, the step of baking the dough composition includes moisture extraction venting. The dough composition is completely baked without the formation of a crust on its surface. The dough composition may be formed into one or more shapes before or after the baking step (e.g., dough is shaped into a plurality of bars and then the bars are baked or the dough is baked in the form of a sheet and then the baked sheet is cut into a plurality of bars). In some preferred embodiments, the flour is at least 20% of the dough composition (e.g., at least 25%) and the fat component is at least 5% of the dough composition (e.g., at least 9%). The method of making the reduced SFSS soft-baked snack product can further include a step of preparing the dough composition including mixing the flour component, the fat component and the sucrose-free sugar component. In some embodiments, the step of preparing the dough composition further includes a step of adding inclusions. In some embodiments, the method of making the reduced SFSS soft-baked snack product includes a step of applying a sweet coating to the baked dough. Preferably, the sweet coating contains maltodextrin and/or resistant dextrin and does not contain sucrose.

The implementations described above and other implementations are within the scope of the following claims. One skilled in the art will appreciate that the present disclosure can be practiced with embodiments other than those disclosed such that the disclosed embodiments are presented for purposes of illustration and not limitation.

## Claims

1. A dough composition for making a shelf-stable, indulgent, soft-baked snack product having reduced saturated fat, sodium and/or sugar levels ("reduced SFSS"), the composition comprising:
a flour component;
a fat component consisting of sunflower oil; and
a sucrose-free sugar component including isolated fructose.

2. The dough composition of claim 1, wherein the flour component comprises at least 20% of the dough composition.

3. The dough composition of claim 1 or 2, wherein the sunflower oil is high oleic sunflower oil.

4. The dough composition of any one of claims 1-3, wherein the sucrose-free sugar component comprises a flavor modulator that enhances sweetness upfront and a flavor modulator that enhances long lasting sweetness.

5. The dough composition of any one of claims 1-4, wherein the sucrose-free sugar component includes inulin or its hydrolyzed form, oligofructose.

6. The dough composition of any one of claims 1-5, further comprising potassium bicarbonate.

7. A reduced SFSS, shelf-stable, indulgent, soft-baked snack product comprising:
a flour component;
a fat component consisting of sunflower oil; and
a sucrose-free sugar component including isolated fructose.

8. The snack product of claim 7, wherein the flour component comprises at least 20% of the snack product.

9. The snack product of claim 7 or 8, wherein the sunflower oil is high oleic sunflower oil.

10. The snack product of any one of claims 7-9, wherein the sucrose-free sugar component comprises a flavor modulator that enhances sweetness upfront and a flavor modulator that enhances long lasting sweetness.

11. The snack product of any one of claims 7-10, further comprising potassium bicarbonate.

12. The snack product of any one of claims 7-11, further comprising a sweet coating including maltodextrin or resistant dextrin.

13. A method of preparing a reduced SFSS, shelf-stable, indulgent, soft-baked snack product, the method comprising:
preparing a dough composition including
a flour component,
a fat component consisting of sunflower oil, and
a sucrose-free sugar component including isolated fructose; and
baking the dough composition.

14. The method of claim 13, wherein the flour component comprises at least 20% of the dough composition.

15. The method of claim 13 or 14, wherein the sunflower oil is high oleic sunflower oil.

16. The method of any one of claims 13-15, wherein the sucrose-free sugar component comprises a flavor modulator that enhances sweetness upfront and a flavor modulator that enhances long lasting sweetness.

17. The method of any one of claims 13-16, wherein the sucrose-free sugar component includes inulin or its hydrolyzed form, oligofructose.

18. The method of any one of claims 13-17, further comprising potassium bicarbonate.

19. The method of any one of claims 13-18, wherein baking the dough composition includes baking the dough composition at a temperature below 170°C for more than 15 minutes.

20. The method of any one of claims 13-19, further comprising applying a sweet coating including maltodextrin or resistant dextrin after baking the dough composition.
